# EUROPEAN PATENT APPLICATION

(11) **EP 2 025 877 A2**
(43) Date of publication of application: **18.02.2009**
(21) Application number: 08252728.4
(22) Date of filing: 18.08.2008
(51) Int. Cl.: F01D 11/00, F01D 11/02, F01D 11/04

(54) **Hydrostatic seal of a gas turbine engine and corresponding turbine assembly**

(30) Priority: 23.08.2007 US 843850; 20.08.2007 US 841124; 17.08.2007 US 840645; 17.08.2007 US 840636
(71) Applicant: United Technologies Corporation, Hartford, CT 06101 (US)
(72) Inventor: Munsell, Peter M., Granby, CT 06035 (US); Alvanos, Ioannis, West Springfield, MA 01089 (US)
(74) Representative: Leckey, David Herbert

(57) **Abstract**

A turbine assembly for a gas turbine engine includes a turbine having a hydrostatic seal (150) formed by a seal face (152) and a seal runner (154).

## Description

### BACKGROUND

### Technical Field

The disclosure generally relates to gas turbine engines.

### Description of the Related Art

A gas turbine engine typically maintains pressure differentials between various components during operation. These pressure differentials are commonly maintained by various configurations of seals. In this regard, labyrinth seals oftentimes are used in gas turbine engines. As is known, labyrinth seals tend to deteriorate over time. By way of example, a labyrinth seal can deteriorate due to rub interactions from thermal and mechanical growths, assembly tolerances, engine loads and maneuver deflections. Unfortunately, such deterioration can cause increased flow consumption resulting in increased parasitic losses and thermodynamic cycle loss.

### SUMMARY

Gas turbine engine systems involving hydrostatic face seals are provided. In this regard, an exemplary embodiment of a hydrostatic seal assembly for a gas turbine engine comprises a seal face assembly having a seal face and a mounting bracket, the mounting bracket being operative to removably mount the seal face assembly within a gas turbine engine such that the seal face is positioned to maintain a pressure differential within the gas turbine engine during operation of the engine.

An exemplary embodiment of a turbine assembly for a gas turbine engine comprises a turbine having a hydrostatic seal formed by a seal face and a seal runner.

An exemplary embodiment of a gas turbine engine comprises: a compressor; a shaft interconnected with the compressor; and a turbine operative to drive the shaft, the turbine having a hydrostatic seal formed by a seal face and a seal runner.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a gas turbine engine.
FIG. 2 is a schematic diagram depicting a portion of an exemplary embodiment of a low-pressure turbine incorporating a hydrostatic face seal.
FIG. 3 is a schematic diagram showing detail of the hydrostatic face seal of FIG. 2.
FIG. 4 is a schematic diagram depicting a portion of another exemplary embodiment of a low-pressure turbine incorporating a hydrostatic face seal.

### DETAILED DESCRIPTION

Gas turbine engine systems involving hydrostatic face seals are provided, several exemplary embodiments of which will be described in detail. In this regard, hydrostatic face seals can be used at various locations of a gas turbine engine, such as in association with a low-pressure turbine. Notably, a hydrostatic seal is a seal that uses balanced opening and closing forces to maintain a desired separation between a seal face and a corresponding seal runner. In some embodiments, the seal runner of a hydrostatic seal can be integrated into an existing component of the turbine. By way of example, the seal runner can be provided as a portion of an exterior surface of a turbine hub. By integrating components in such a manner, for example, a potential reduction in the overall weight of the turbine can be achieved.

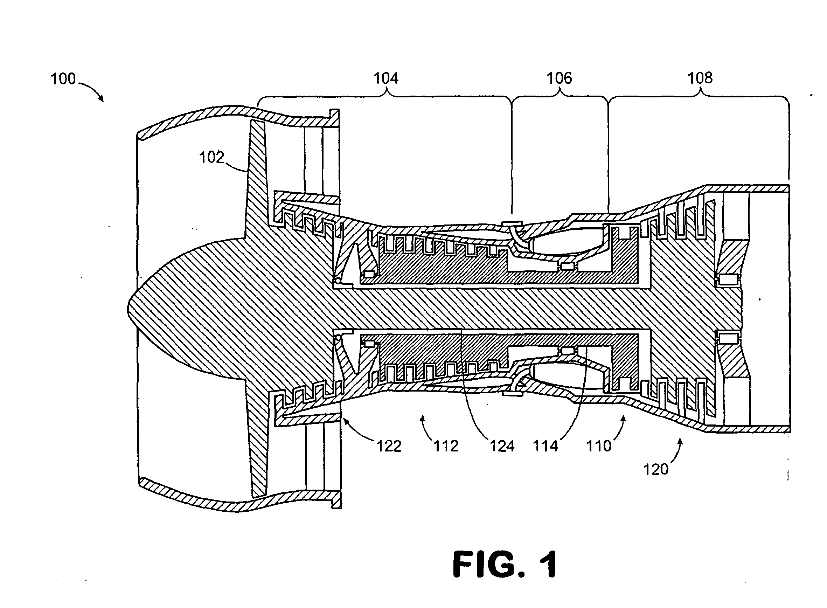

FIG. 1 is a schematic diagram depicting an exemplary embodiment of a gas turbine engine. As shown in FIG. 1, engine 100 is configured as a turbofan that incorporates a fan 102, a compressor section 104, a combustion section 106 and a turbine section 108. Although the embodiment of FIG. 1 is configured as a turbofan, there is no intention to limit the concepts described herein to use with turbofans, as various other configurations of gas turbine engines can be used.

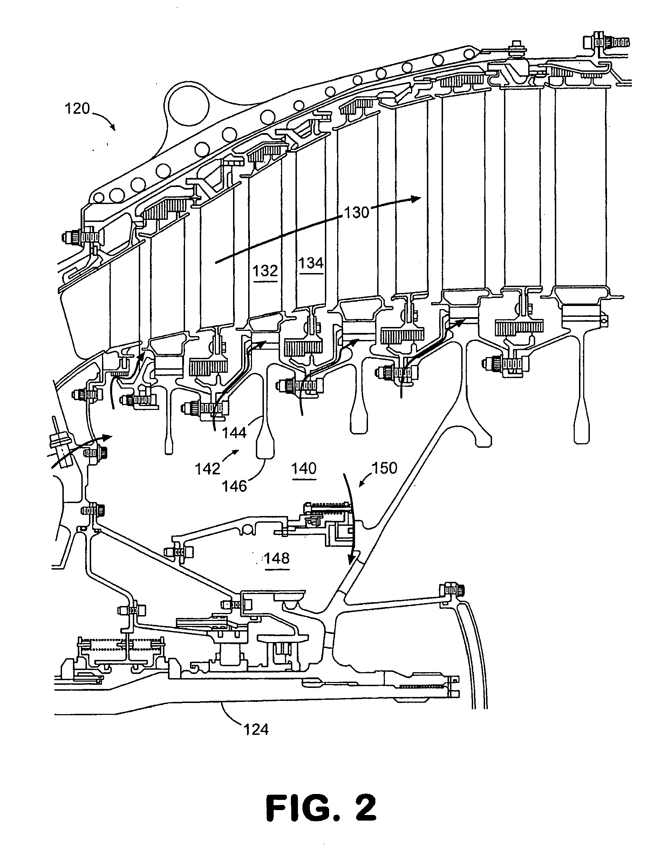

Engine 100 is a dual spool engine that includes a high-pressure turbine 110 interconnected with a high-pressure compressor 112 via a shaft 114, and a low-pressure turbine 120 interconnected with a low-pressure compressor 122 via a shaft 124. As shown in greater detail in FIG. 2, low-pressure turbine 120 incorporates a hydrostatic face seal. It should be noted that although the embodiment of FIGS. 1 and 2 incorporates a hydrostatic face seal in the low-pressure turbine, such seals are not limited only to use with low-pressure turbines.

As shown in FIG. 2, low-pressure turbine 120 defines a primary gas flow path 130 along which multiple rotating blades (e.g., blade 132) and stationary vanes (e.g., vane 134) are located. Notably, the blades are mounted to turbine disks, the respective webs and bores of which extend into a high-pressure cavity 140. For instance, disk 142 includes a web 144 and a bore 146, each of which extends into cavity 140.

A relatively lower-pressure cavity 148 is oriented between high-pressure cavity 140 and shaft 124, with a hydrostatic seal 150 being provided to maintain a pressure differential between the high-pressure cavity and the lower-pressure cavity. Note that the arrows depict representative locations at which the higher-pressure gas attempts to leak from the high-pressure cavity.

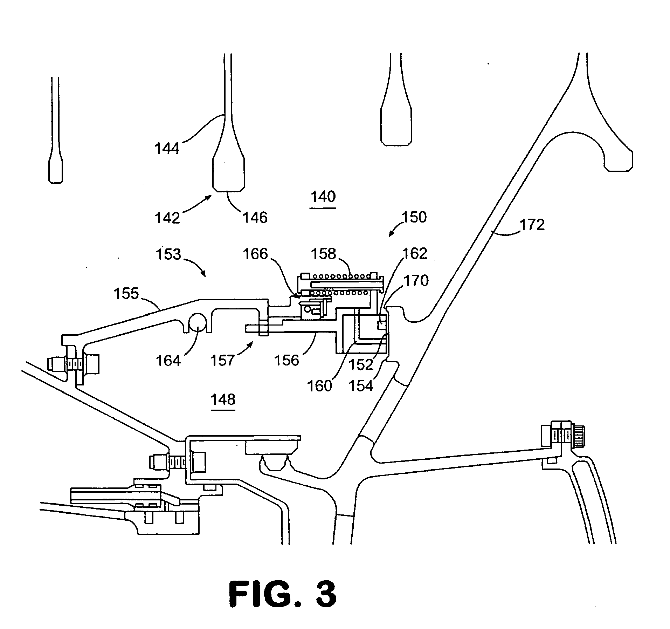

FIG. 3 schematically depicts hydrostatic seal 150 of FIG. 2 in greater detail. As shown in FIG. 3, hydrostatic seal 150 is configured as a lift-off seal incorporating a seal face 152 and a seal runner 154. The seal face forms a portion of a seal face assembly 153, which also includes a mounting bracket 155 for removably mounting the assembly.

In operation, the seal face intermittently contacts the sea! runner. By way of example, contact between the seal face and the seal runner can occur during sub-idle conditions and/or during transient conditions. However, during normal operating conditions, the seal face and the seal runner do not contact each other. Specifically, the seal face rides against a film of air during normal operating conditions which increases the durability and performance of the seal.

In this regard, the seal face is positioned by a carrier 156 that can translate axially with respect to stationary mounting bracket 155, which is attached to a nonrotating component of the engine. An anti-rotation lock 157 is provided to prevent circumferential displacement and to assist in aligning the seal carrier to facilitate axial translation. Additionally, a dampening feature 164 is provided to dampen the stationary mounting bracket 155.

A biasing member 158 (e.g., a spring) is biased to urge the carrier so that the seal face contacts the seal runner. Multiple biasing members may be spaced about the stationary mounting bracket and carrier. In operation, contact between the seal face and the seal runner is maintained until gas pressure in the high-pressure cavity is adequate to overcome the biasing force, thereby separating the seal face from the seal runner. This separation occurs responsive to high pressure air passing through the holes 160, thereby creating an air film for the seal face 152 to ride against. Since the embodiment of FIGS. 1 - 3 is configured as a lift-off seal (i.e., at least intermittent contact is expected), materials forming the surfaces that will contact each other are selected, at least in part, for their durability. In this regard, carbon can be used as a seal face material. It should be noted, however, that carbon may be susceptible to deterioration at higher temperatures. Therefore, carbon should be used in locations where predicted temperatures are not excessive. By way of example, use of such a material may not be appropriate, in some embodiments, in a high-pressure turbine.

As shown in FIG. 3, the seal runner is integrated with and formed by a dedicated surface of an existing engine component, in this case, surface 170 of turbine hub 172. As such, a separate seal runner component (and potentially one or more associated mounted brackets) is not required. Notably, although depicted in this embodiment as being incorporated into the turbine hub, various other components may provide an appropriate surface for use as a seal runner. For instance, a turbine bore (e.g., bore 146), a turbine web (e.g., web 144) or any feature that would allow for a film of air to form to create in an area where a pressure differential is required may be used.

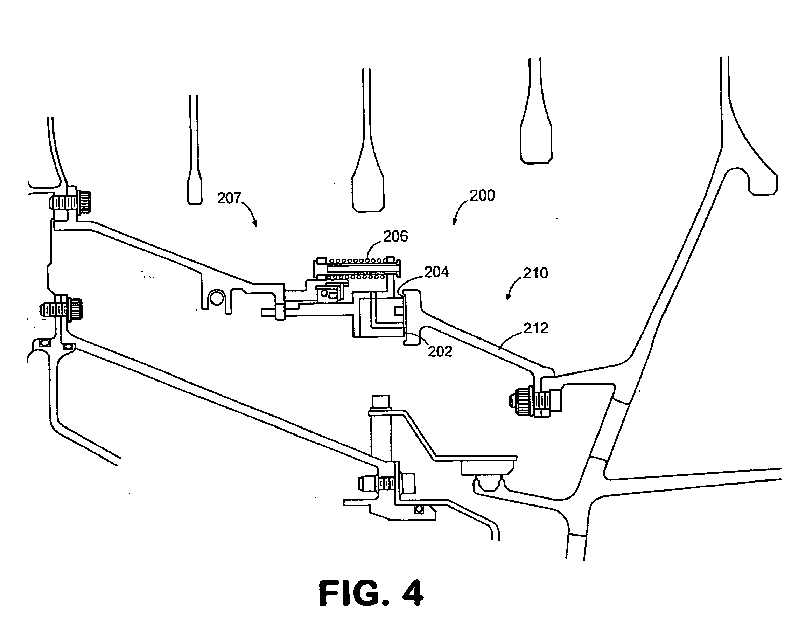

FIG. 4 is a schematic diagram depicting another exemplary embodiment of a portion of a low-pressure turbine that incorporates a hydrostatic face seal. As shown in FIG. 4, seal 200 is configured as a lift-off seal that incorporates a seal face 202 that is urged to contact a seal runner 204 by a biasing member 206. Similar to the embodiment of FIG. 3, seal face 202 forms a portion of a seal face assembly 207, which removably mounts the seal face. Seal face 202 of this embodiment intermittently contacts the seal runner, such as during sub-idle and/or transient conditions. However, during normal operating conditions, the seal face and the seal runner do not contact each other.

In contrast, however, to the embodiment of Fig. 3, seal runner 204 of this embodiment is not directly integrated with an existing component of the turbine. Specifically, seal runner 204 is provided as a portion of a seal runner assembly 210 that includes a mounting bracket 212. Thus, seal 200 is provided as a removable assembly, the location of which can be adjusted. Notably, providing a hydrostatic face seal as a radially adjustable and/or removable assembly can enable thrust balance trimming of the gas turbine engine in which the hydrostatic face seal is installed.

In this regard, seal 200 is mounted at a thrust balance location of the low-pressure turbine. During the development phase of a gas turbine engine it is required to maintain the ability to modify the axial thrust load to meet bearing load requirements. Since the hydrostatic face seal assembly is not directly integrated with another component of the turbine, positioning of the seal can be adjusted as desired. By way of example, during initial development testing, the position of the seal can be adjusted to react to adverse learning or to compensate for other design changes.

It should be emphasized that the above-described embodiments are merely possible examples of implementations set forth for a clear understanding of the principles of this disclosure. Many variations and modifications may be made to the above-described embodiments without departing substantially from the principles of the disclosure. By way of example, although the embodiments described herein are configured as lift-off seals, other types of seals can be used. All such modifications and variations are intended to be included herein within the scope of this disclosure and protected by the accompanying claims.

## Claims

1. A hydrostatic seal assembly (150,200) for a gas turbine engine comprising:
a seal face assembly (153;207) having a seal face (152;202) and a mounting bracket (155), the mounting bracket (155) being operative to removably mount the seal face assembly (153;207) within a gas turbine engine such that the seal face (152;202) is positioned to maintain a pressure differential within the gas turbine engine during operation of the engine.

2. The assembly of claim 1, further comprising a seal runner assembly (210) having a seal runner (204) and a mounting bracket (212);
wherein the mounting bracket (212) is operative to removably mount the seal runner (204) assembly within the gas turbine engine such that interaction of the seal face (202) and the seal runner (204) maintains the pressure differential during operation of the engine.

3. The assembly of claim 1 or 2, wherein the hydrostatic seal is a lift-off seal, with the seal face (152;202) being biased to a contact position in which the seal face (152;202) contacts the seal runner (154;204).

4. The assembly of claim 3, wherein the seal face assembly (153;207) has a biasing member (158;206) operative to bias the seal face (152;202) to the contact position.

5. The assembly of claim 4, wherein the biasing member (158;206) is a spring.

6. The assembly of any preceding claim, wherein the seal face assembly (153;207) has a carrier (156) operative to move the seal face (153;207) axially to set a spacing between the seal face (153;207) and a seal runner (154;204).

7. The assembly of any preceding claim, wherein at least a portion of the seal face (153;207) configured to contact a or the seal runner (154;204) is formed of carbon.

8. A turbine assembly for a gas turbine engine comprising:
a turbine (120) having a hydrostatic seal (150;200) formed by a seal face (152;202) and a seal runner (154;204).

9. The assembly of claim 8, wherein:
the turbine (120) comprises a turbine hub and a turbine disk; and
the seal runner (154) is provided by a surface of at least one of: the turbine hub and the turbine disk.

10. The assembly of claim 9, wherein:
the turbine disk comprises a turbine web (144) and a turbine bore (146); and
the seal runner (154) is provided by a surface of at least one of: the turbine web (144) and the turbine bore (146).

11. The assembly of claim 8, 9 or 10, wherein at least a portion of the seal face (152;202) configured to contact the seal runner (154;204) is formed of carbon.

12. The assembly of claim 8, wherein the seal runner (204) is a portion of a seal runner assembly (210) having a mounting bracket (212), the mounting bracket (212) being operative to removably mount the seal runner assembly (210) within the turbine.

13. The assembly of any of claims 8 to 12, wherein seal face (152;202) is a portion of a seal face assembly (153;207) having a mounting bracket (155), the mounting bracket (155) being operative to removably mount the seal face assembly (153;207) within the turbine.

14. The assembly of any of claims 8 to 13, wherein the hydrostatic seal (150;200) is a lift-off seal, with the seal face (152;202) being biased to a contact position in which the seal face (152;202) contacts the seal runner (154;204).

15. The assembly of any of claims 8 to 14, wherein the hydrostatic seal (150;200) is located at a thrust balance location of the turbine.
